# EUROPEAN PATENT SPECIFICATION

(11) **EP 1 925 519 B1**
(45) Date of publication and mention of the grant of the patent: **21.10.2015**
(21) Application number: 08003436.6
(22) Date of filing: 03.09.2002
(51) Int. Cl.: B60W 10/02, B60W 10/10, F16H 61/22, F16D 48/06

(54) **Automated manual transmission system for a vehicle**
Automatisiertes manuelles Getriebe für ein Fahrzeug
Système de transmission manuelle automatique pour véhicule

(30) Priority: 04.09.2001 JP 2001267755
(43) Date of publication of application: 28.05.2008
(62) Divisional of application: 02078652.1
(73) Proprietor: AISIN SEIKI KABUSHIKI KAISHA, Kariya-shi, Aichi-ken (JP); AISIN AI Co., Ltd., Nishio-shi, Aichi-ken (JP)
(72) Inventor: Terakawa, Tomomitsu, Kariya-shi, Aichi-ken, 448-8650 (JP); Shimizu, Masaru, Toyota-shi, Aichi-ken, (JP); Taguchi, Yoshinori, Anjo-shi, Aichi-ken, (JP); Haneda, Yoshitomi, Anjo-shi, Aichi-ken, (JP); Miyazaki, Takeshige, Nishio-shi, Aichi-ken, (JP); Aoyama, Yoshiyuki, Nishio-shi, Aichi-ken, (JP)
(74) Representative: Serjeants LLP

(56) References cited:
- EP-A- 0 676 566
- DE-A1- 3 617 256
- DE-C1- 3 905 698
- US-A- 4 572 340

## Description

### FIELD OF THE INVENTION

This invention generally relates to an automated manual transmission system capable of avoiding a condition that a shift operation can not be performed when gears are not positioned at their synchronized positions (hereinafter, referred to as a shift-lock) in a case that an engine is stationary, and for controlling an automated manual transmission capable of automatically performing the shift operation by moving a sleeve disposed between plural gears in an axial direction by an actuator.

### BACKGROUND OF THE INVENTION

When a vehicle having an automated manual transmission is parked on a sloping road and the like, a so-called gear-parking, in which the vehicle is parked by engaging a gear by operating a shift lever, can be performed. That is, such a vehicle can be prevented from going down the sloping road by employing the gear-parking together with a parking break.

When the vehicle is parked in gear under the condition that the engine is driven, an actual shift stage is temporarily shifted to a neutral condition so as to avoid a shift-lock. The shift-lock represents a condition where a shift operation can not be performed because the gears are not positioned at their synchronized positions. Then, a clutch is engaged for a moment, and a "gap" towards the turning direction is generated between the gears through a synchromesh mechanism. The gears are displaced to be engaged by use of this gap and the gear-parking can be executed at a desired shift stage.

However, when the engine is stationary, even if the clutch is engaged for a while, the "gap" cannot be generated between the gears through the synchromesh mechanism. Accordingly, there may be some cases in which the gear shift-lock may occur and the gear-parking may not be able to be executed due to the shift-lock.

The present invention seeks to overcome such a problem. The purpose of the present invention is to provide an improved automated manual transmission system capable of preventing the gear shift-lock and allowing a vehicle to park in gear even when the engine is stationary.

An automated manual transmission system according the preamble of claim 1 is known by EP0676566A1.

### SUMMARY OF THE INVENTION

In order to solve the aforementioned problem, an automated manual transmission system for a vehicle of the present invention includes an automatic clutch assembly for automatically performing a clutch engaging operation by an actuator for a clutch, an automated manual transmission connected to an engine via the automatic clutch assembly, and a control means. The automated manual transmission has an actuator for a shift operation for shifting a sleeve disposed between plural gear sets in an axial direction based on an operation of a shift lever and for automatically shifting a shift stage in response to the axial movement of the sleeve. The control means controls the automatic clutch assembly and the automated manual transmission by driving the actuator for the clutch and the actuator for the shift operation.

According to an aspect of the present invention, the automated manual transmission system of the present invention is characterized in that the shift stage of the automated manual transmission is shifted to a shift stage required by the operation of the shift lever after the shift stage of the automated manual transmission is set at a first predetermined shift stage different from the shift stage required by the operation of the shift lever on the condition that the sleeve and the gear set have not been synchronized when the engine has been stationary and the sleeve can not be moved in the axial direction for shifting the shift stage of the automated manual transmission to the shift stage required by the operation of the shift lever.

According to another aspect of the present invention, the control means shifts the shift stage of the automated manual transmission to the shift stage required by the operation of the shift lever after the shift stage of the automated manual transmission is set at a second predetermined shift stage different from the first predetermined shift stage and the shift stage required by the operation of the shift lever on the condition that the sleeve and the gear set have not been synchronized when the engine has been stationary and the sleeve can not be moved in the axial direction for shifting the shift stage of the automated manual transmission to the shift stage required by the operation of the shift lever and on the condition that the shift stage of the automated manual transmission can not be shifted to the shift stage required by the operation of the shift lever even after the shift stage of the automated manual transmission was shifted to the first predetermined shift stage.

According to further aspect of the present invention, the automated manual transmission system further can include a restricting means for restricting the operation of the shift lever. The control means restricts the operation of the shift lever by use of the restricting means when the engine has been stationary. Further, the control means restricts the operation of the shift lever by use of the restricting means on the condition that the shift lever has been positioned at a neutral position based upon the operation of the shift lever and the engine has been stationary.

The automated manual transmission system of the present invention can be further provided with an alerting means for alerting a driver that the vehicle has been parked under a gear-parking. In this case, the control means alerts the driver that the vehicle has been under the gear-parking for a predetermined period of time by the alerting means on the condition that the vehicle has been under the gear-parking and an ignition key has been inserted in to a key cylinder.

Further, the shift operation in the automated manual transmission can be performed for corresponding the shift stage of the automated manual transmission to the shift stage required by the operation of the shift lever after the shift stage is set at a neutral condition for a moment and the clutch engaging operation is performed on the condition that the sleeve and the gear set have not been synchronized when the engine has been driven and the sleeve can not be moved in the axial direction for shifting the shift stage of the automated manual transmission to the shift stage required by the operation of the shift lever.

### BRIEF DESCRIPTION OF THE DRAWING FIGURES

The foregoing and additional features and characteristics of the present invention will become more apparent from the following detailed description considered with reference to the accompanying drawing figures wherein:
FIG. 1 is a schematic block view illustrating an outline of a vehicle control system according to an embodiment of the present invention;
FIG. 2 is a schematic view illustrating an automated manual transmission shown in FIG. 1;
FIG. 3 is a perspective view of a shift unit according to the embodiment of the present invention;
FIG. 4 is a flowchart explaining an operation for controlling a shift-lock according to the embodiment of the present invention; and
FIG. 5 is a flowchart explaining an operation for controlling a lock of a shift lever illustrated in FIG. 3.

### DETAILED DESCRIPTION OF THE INVENTION

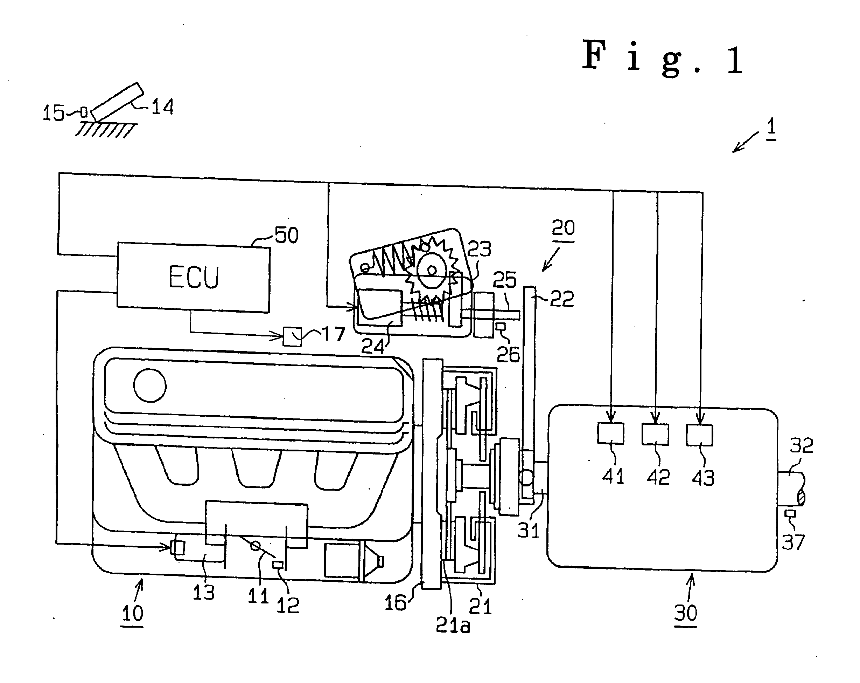

Referring to FIG. 1, a vehicle control system 1 includes an automatic clutch assembly 20, which automatically performs a clutch engagement operation based on a shift lever's operation by a driver and vehicle driving conditions and which is assembled to an output shaft (i.e. a crankshaft) of the engine 10. An automated manual transmission 30 is connected to the engine 10 via the automatic clutch assembly 20.

The engine 10 is provided with a throttle valve 11 for adjusting an input air amount, a throttle sensor 12 for detecting an opening degree of the throttle valve 11 (i.e. a throttle opening degree), and an actuator 13 for the throttle valve 11 for controlling an opening/closing operation of the throttle valve 11. An accelerator pedal 14 (i.e. an acceleration operating member) depressed by a vehicle driver is equipped with an acceleration opening degree sensor 15 for detecting an operating amount of the accelerator pedal 14 (i.e. an acceleration opening degree). The actuator 13 for the throttle valve 11 is activated based upon the acceleration opening degree detected by the acceleration opening degree sensor 15. Therefore, an engine output in response to the operating amount of the accelerator pedal 14 can be generated.

The automatic clutch assembly 20 is provided with a mechanical (dry type-single disc clutch) friction clutch 21 and a clutch lever 22 controlling the engagement of the friction clutch 21 by an actuator (i.e. a first actuator) 23 for the friction clutch 21 (i.e. an actuator for a clutch). The actuator 23 is provided with a direct current motor 24 as a driving source, and a rod 25 is moved in a forward or rearward direction by driving the motor 24. The clutch lever 22 is operated in response to the displacement of the rod 25, and the engagement of the friction clutch 21 is controlled. In other words, driving power from the engine 10 is cut off by an engaging operation of the friction clutch 21.

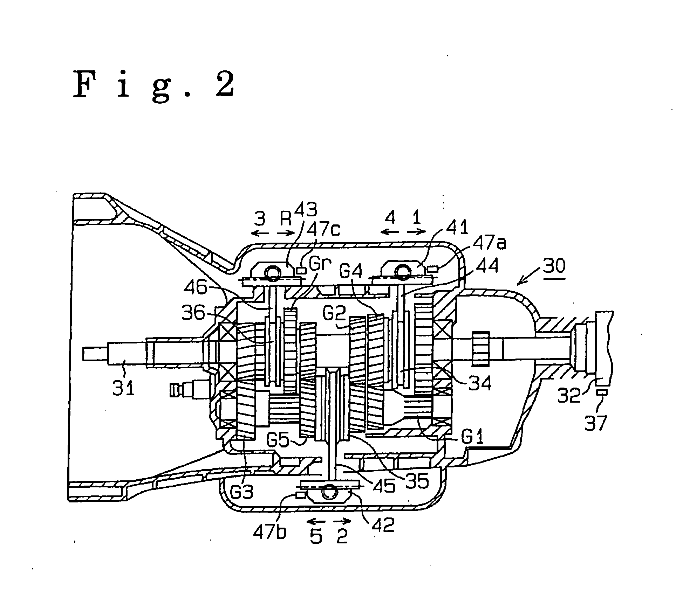

Referring to FIG. 2, the automated manual transmission 30 is a biaxial type gear transmission which is applicable for five forward shift stages and a single rearward shift stage. The transmission 30 is provided with an input shaft 31, an output shaft 32, three pairs (6 pieces) of gear sets (G1 and G4, G2 and G5, G3 and Gr), and three sleeves 34, 35 and 36. The input shaft 31 of the transmission 30 is connected to the friction clutch 21 so as to establish a power-transmitting path. The output shaft 32 is connected to an axle shaft (not shown) so as to establish a power-transmitting path. The transmission 30 is equipped with a rotational sensor 37 for detecting a rotational number of the output shaft 32, thus a vehicle speed can be obtained based upon the rotational number of the output shaft 32.

One of the pairs of gear sets, illustrated at the right side of FIG. 2, is a gear set G1 for a first shift stage and a gear set G4 for a fourth shift stage. The gear sets G1 and G4 face each other and the sleeve 34 is disposed therebetween. A second pair of gear sets, illustrated at the middle of FIG. 2, is a gear set G2 for a second shift stage and a gear set G5 for a fifth shift stage. The gear sets G2 and G5 face each other and the sleeve 35 is disposed therebetween. A third pair of gear sets, illustrated at the left side of FIG. 2, is a gear set G3 for a third shift stage and a gear set Gr for a reverse shift stage. The gear sets G3 and Gr face each other and the sleeve 36 is disposed therebetween. Each sleeve 34, 35, or 36 forms a synchromesh mechanism with a synchronizer ring and a clutch hub. That is, the automated manual transmission 30 is a synchromesh-type transmission. When the sleeves 34, 35 and 36 are moved in an axial direction of the output shaft 32, a particular shift stage is selected corresponding to an engagement of the gears so as to establish a power-transmitting path to the output shaft 32.

For example, when the sleeve 34 is moved toward the gear set G1 for the first shift stage, a power-transmitting path can be established via the gear set G1 for the first shift stage and the driving power is transmitted to the output shaft 32. When the sleeve 34 is moved to the side of the gear set G4 for the fourth shift stage, a power-transmitting path can be established via the gear set G4 for the fourth shift stage and the driving power is transmitted to the output shaft 32. When each sleeve 35 or 36 is moved to the side of one of the pair gear sets, a power-transmitting path can be established via the gear set to which the sleeve was moved and the driving power is transmitted to the output shaft 32. When the sleeve is moved to a middle position (neutral) between the pair of gear sets, a power-transmitting path cannot be established via any gear set and the driving power is not transmitted to the output shaft 32.

The automated manual transmission 30 is provided with actuators (i.e. second actuators) 41, 42 and 43 for the shift operation. The actuator 41 for the shift operation moves the sleeve 34 via a shift fork 44. The actuator 42 for the shift operation moves the sleeve 35 via a shift fork 45. Further, the actuator 43 for the shift operation moves the sleeve 36 via a shift fork 46. Each actuator 41, 42, or 43 is equipped with a motor having a speed reduction gear, a pinion assembled to a rotational shaft of the motor, a rack engaged with the pinion and integrally moved with each shift fork 44, 45 or 46. When the motors are rotatably driven, the shift forks 44, 45 and 46 are moved in an axial direction of the output shaft 32 via the pinions and the racks, respectively. Therefore, the sleeves 34, 35 and 36 are pushed and moved.

The automated manual transmission 30 is equipped with position sensors 47a, 47b and 47c for detecting the position of each sleeve 34, 35, or 36. The condition of transmitting the power via each gear set is judged based upon the positions of the sleeves 34, 35, and 36 detected by the sensors 47a, 47b and 47c, respectively.

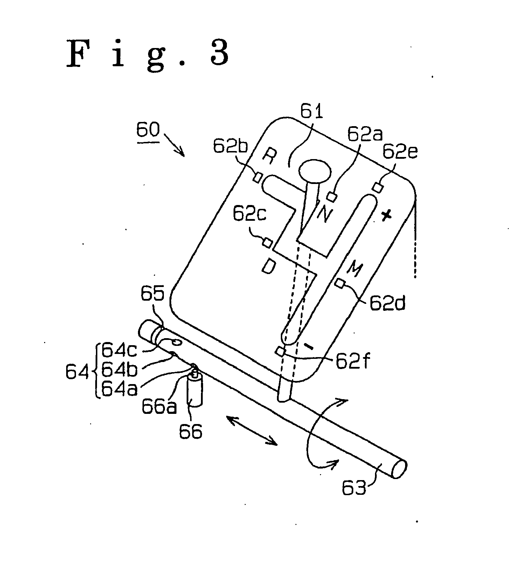

Referring to FIG. 3, a shift unit 60 is equipped with a shift lever 61 that is operated along a shift pattern. Further, position sensors 62a, 62b, 62c, 62d, 62e and 62f for detecting the position of the shift lever 61 are provided in each position of the shift unit 60.

The position sensor 62a detects the shift operation of the shift lever 61 to an N position, i.e. a neutral position in which the driving power can not be transmitted via any gear set to the output shaft 32 of the automated manual transmission 30. The position sensor 62b detects the shift operation of the shift lever 61 to an R position, i.e. a reverse position for establishing the power-transmitting path via the gear set Gr to the output shaft 32. The position sensor 62c detects the shift operation of the shift lever 61 to a D position, i.e. a drive position for establishing the power-transmitting path via any one of the gear sets G1, G2, G3, G4, and G5 to the output shaft 32 under an automatic shift mode. The position sensor 62d detects the shift operation of the shift lever 61 to an M position, i.e. a manual position for establishing the power-transmitting path via any one of the gear sets G1, G2, G3, G4 and G5 to the output shaft 32 under a manual shift mode. The position sensor 62e detects the shift operation of the shift lever 61 to a positive (+) position, i.e. an upper shift position for establishing the power-transmitting path via a shift-up gear set to the output shaft 32. The position sensor 62f detects the shift operation of the shift lever 61 to a negative (-) position, i.e. a lower shift position for establishing the power-transmitting path via a shift-down gear set to the output shaft 32. As aforementioned, a shift stage of the automated manual transmission 30 can be switched based upon the shift position detected by the above position sensors.

A rod 63 is fixed to a lower end of the shift lever 61. When the shift lever 61 is operated along the shift pattern, the rod 63 is moved in a right or left direction or is rotated in an axial direction thereof. Further, a hole 64 (i.e. a restricting means) including plural holes 64a, 64b, 64c and a groove 65 (i.e. the restricting means) are defined at the left end side of the rod 63. A solenoid 66 for controlling the operation of the shift lever 61 is provided for a bottom portion of the rod 63. That is to say, if a movable segment 66a (i.e. the restricting means) of the solenoid 66 (i.e. the restricting means) is fitted into the first hole 64a under the condition that the shift lever 61 is positioned at the "R" position, the operation of the shift lever 61 is regulated. Further, if the movable segment 66a of the solenoid 66 is fitted into the second hole 64b under the condition that the shift lever 61 is positioned at the "N" position, the operation of the shift lever 61 is regulated. Furthermore, if the movable segment 66a of the solenoid 66 is fitted into the third hole 64c under the condition that the shift lever 61 is positioned at the "D" position, the operation of the shift lever 61 is regulated. Still further, if the movable segment 66a of the solenoid 66 is fitted into the groove 65 under the condition that the shift lever 61 is positioned at the "M" position, the operation of the shift lever 61 in a direction of the "D" position is regulated. Alternatively, the operation of the shift lever 61 can be regulated only when the shift lever 61 is positioned at the "N" position. In this case, it is allowed to operate the shift lever 61 for releasing the engagement of the gears, namely, such a shift operation from the "R" position to the "N" position, or a shift operation from the "D" position to the "N" position.

As illustrated in FIG. 1, the vehicle control system 1 includes an electronic control unit (ECU) 50 as a control means for controlling in various ways. According to an embodiment of the present invention, the automated manual transmission system is formed by the ECU 50, the automatic clutch assembly 20, and the automated manual transmission 30.

The ECU 50 is provided with a well-known microcomputer. The ECU 50 is connected to various sensors such as the throttle sensor 12 and the acceleration opening degree sensor 15, the actuator 13 for the throttle valve 11, the actuator 23 for the friction clutch 21, and the actuators 41, 42 and 43 for the shift operation. The ECU 50 reads the signals detected by the various sensors so as to detect the vehicle driving conditions such as the throttle opening degree, the acceleration opening degree, the vehicle speed, and the shift position. Then, the ECU 50 further activates the actuator 13 for the throttle valve 11, the actuator 23 for the friction clutch 21, and the actuators 41, 42 and 43 for the shift operation based upon the vehicle driving conditions.

More specifically, the ECU 50 reads the operated amount of the accelerator pedal 14 (i.e. the acceleration opening degree) based upon a value detected by the acceleration opening degree sensor 15. The ECU 50 activates the actuator 13 for the throttle valve 11 based upon the acceleration opening degree. Therefore, the amount of air to be inputted to the engine 10 is adjusted so as to generate an engine output corresponding to the driver's operation of the accelerator pedal 14. Further, when the shift operation is performed by the automated manual transmission 30, the ECU 50 drives the actuator 23 for the friction clutch 21 and interrupts the engagement of the friction clutch 21, and then activates the actuator 13 for the throttle valve 11 and closes the throttle valve 11. Further, the ECU 50 drives the actuators 41, 42 and 43 for the shift operation and then switches the gear set (the shift stage) of the automated manual transmission 30.

For instance, when the shift operation from the first shift stage to the second shift stage is performed, the ECU 50 moves the sleeve 34 to the neutral position by driving the actuator 41 for the shift operation. The ECU 50 then moves the sleeve 35 towards the side of the gear set G2 for the second shift stage by driving the actuator 42 for the shift operation so as to establish the power-transmitting path via the gear set G2 to the output shaft 32. The ECU 50 operates the friction clutch 21 to be engaged by driving the actuator 23 and returns the throttle valve 11 to be opened corresponding to the acceleration opening degree by driving the actuator 13 for the throttle valve 11. As described above, the shift operation by the automated manual transmission 30 is automatically performed so as to transmit the engine output to a drive line such as a drive wheel via the automated manual transmission 30.

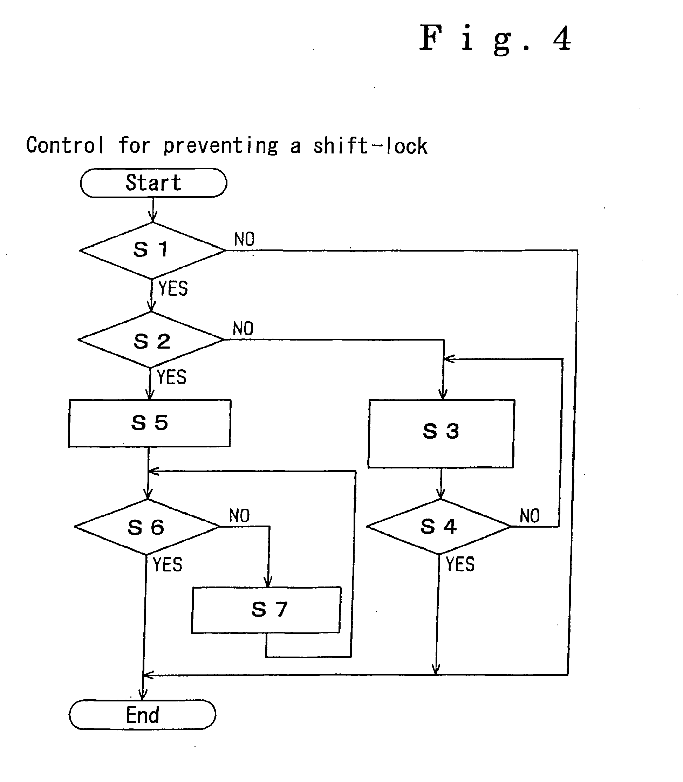

Next, the operation for controlling the shift-lock of the automated manual transmission system structured as described above is explained with reference to a flowchart of FIG. 4. This operation is performed by the ECU 50.

At step S1, the judgment of the shift-lock of the automated manual transmission 30 is performed. That is, the ECU 50 judges whether or not the shift-lock of the automated manual transmission 30 has been caused. More specifically, the ECU 50 judges whether or not the shift-lock has been caused by determining whether or not the shift stage of the automated manual transmission 30 corresponds to the shift stage required by the shift lever 61 by the driver since a predetermined time has passed after the shift lever 61 was operated by the driver. More specifically, the ECU 50 judges whether or not the shift-lock has been caused by determining whether or not signals detected by the position sensors 47a, 47b, and 47c for detecting the positions of the sleeves 34, 35, and 36 correspond to signals detected by the position sensors 62a, 62b, 62c, 62d, 62e, and 62f for detecting the positions of the shift lever 61. Then, if they are the same, the program is terminated. On the other hand, if they are not the same, the program proceeds to step S2.

At step S2, the ECU 50 judges whether or not the engine 10 has been stationary. More specifically, the ECU 50 judges whether or not the engine 10 has been stationary by determining whether or not the engine 10 turns at a predetermined turning speed. Then, if the engine 10 has been stationary, the program proceeds to step S5. On the other hand, if the engine 10 has not been stationary, i.e. when the engine 10 turns at the predetermined turning speed, the program proceeds to step S3.

At step S3, the shift operation in the automated manual transmission 30 is retried so as to correspond the shift stage of the automated manual transmission 30 to the shift stage required by the shift lever 61 after the shift stage of the automated manual transmission 30 is set to be neutral for a while and the automatic clutch assembly 20 is engaged. More specifically, the actuators 41, 42 and 43 for the shift operation move the sleeves 34, 35 and 36 via the shift forks 44, 45 and 46 and thus the gear sets are made neutral for a while. Then, the friction clutch 21 is engaged by driving the actuator 23 for the friction clutch 21. At this stage, when the friction clutch 21 is engaged, a "gap" is generated for engaging the gear set of the shift stage required by the automated manual transmission 30 by the synchromesh mechanism. As a result, the shift-lock can be easily avoided. Further, the actuators 41 to 43 for the shift operation move the sleeves 34 to 36 via the shift forks 44, 45 and 46, and the shift operation in the transmission 30 is retried for corresponding the shift stage of the automated manual transmission 30 to the shift stage required by the shift lever 61.

At step S4, the ECU 50 judges whether or not the retry of the shift operation has been completed. More specifically, the ECU 50 judges whether or not the retry of the shift operation has been completed by confirming whether or not signals detected by the position sensors 47a, 47b, and 47c for detecting the positions of the sleeves 34, 35, and 36 correspond to signals detected by the position sensors 62a, 62b, 62c, 62d, 62e, and 62f for detecting the positions of the shift lever 61. When the retry of the shift operation has not been completed, the program returns to step S3. On the other hand, when the retry of the shift operation has been completed, the program is terminated.

On the other hand, at the aforementioned step S2, if the ECU 50 judges that the engine 10 has been stationary, the program proceeds to step S5 for setting the shift stage of the automated manual transmission 30 at a first predetermined shift stage which does not correspond to the shift stage required by the shift lever 61. The first predetermined shift stage is preset in the ECU 50 so as to be different from the shift stage required by the shift lever 61. That is, the shift stage of the automated manual transmission 30 is set at a different shift stage from the shift stage required by the shift lever in response to the driver's intention. If the shift stage of the automated manual transmission 30 is set at the first predetermined shift stage under the above-described condition, a "gap" can be generated for engaging the gear set of the transmission 30 with the synchromesh mechanism. Therefore, the shift-lock can be easily avoided. After that, the shift stage of the automated manual transmission 30 is retried to correspond to the shift stage required by the shift lever 61.

At step S6, the ECU 50 judges whether or not the retry of the shift operation has been completed, in the same way as the aforementioned step S4. When the retry has not been completed, the program proceeds to step S7. On the other hand, when the retry has been completed, the program is terminated. At step S7, the shift stage of the automated manual transmission 30 is set at a second predetermined shift stage which is different from the shift stage required by the shift lever 61 and the first predetermined shift stage. Further, at step S7, the retry of the shift operation is performed to correspond the shift stage of the transmission 30 to the shift stage required by the shift lever 61 in response to the driver's intention. This procedure is repeated until the retry of the shift operation is completed. The second predetermined shift stage is preset in the ECU 50 so as to be different from the first predetermined shift stage and the shift stage required by the shift lever 61.

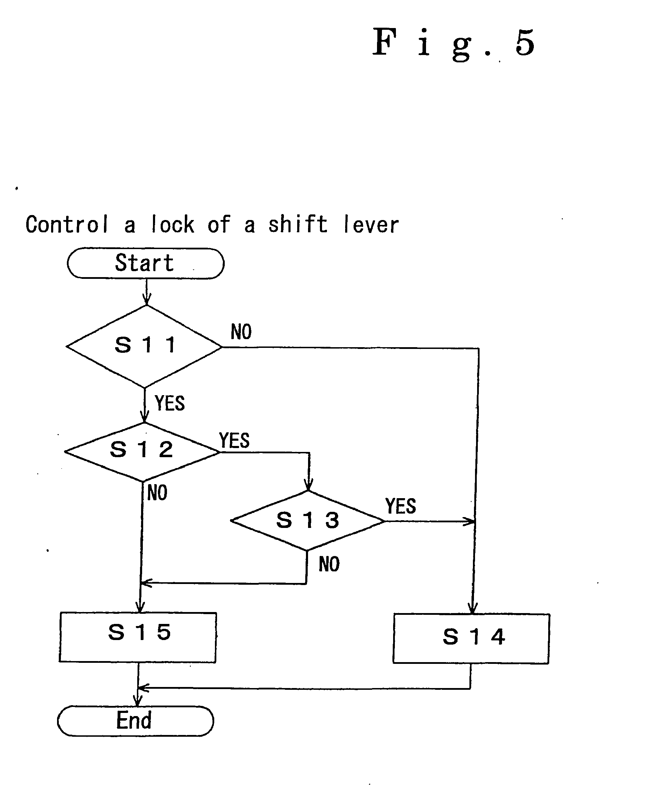

Next, the operation for controlling a lock of the shift lever 61 of the automated manual transmission system is explained with reference to a flowchart of FIG. 5.

At step S11, the ECU 50 judges whether or not an ignition switch is "ON."

When the ignition switch is "ON," the program proceeds to step S12. On the other hand, when the ignition switch is not "ON," the program proceeds to the step S14. At step S12, the ECU 50 judges whether or not the shift lever 61 is positioned at the "N" position based upon the signal detected by the position sensor 62a for detecting the position of the shift lever 61. When the shift lever 61 has been positioned at the "N" position, the program proceeds to step S13. On the other hand, when the shift lever 61 is not positioned at the "N" position, the program proceeds to step S15.

At step S13, the ECU 50 judges whether or not the engine 10 has been stationary. More specifically, the ECU 50 judges whether or not the engine 10 has been stationary by determining whether or not the engine 10 is driving at the predetermined turning speed. When the engine 10 has been stationary, the program proceeds to step S14. When the engine 10 has not been stationary, the program proceeds to step S15.

At step S14, the locking control of the shift lever 61 is performed. More particularly, when the shift lever 61 has been at the "N" position ("YES" at step S12) and the engine 10 has been stationary ("YES" at step S13), the shift lever 61 is locked by fitting the movable segment 66a of the solenoid 66 of FIG. 3 into the second hole 64b. When the ignition switch is "OFF" ("NO" at step S11), the movable segment 66a of the solenoid 66 is fitted into any one of the holes 64a, 64b, 64c, and the groove 65 so that the shift lever 61 is locked.

At step S15, the shift lever 61 is released from being locked. That is, the shift lever 61 is positioned at any one of the other positions except for the "N" position ("NO" at step S12). In this case, the ECU 50 judges that the gear-parking has been employed, thus it is not required to lock the shift lever 61. When the engine 10 is turning at the predetermined turning speed ("NO" at step S13), the vehicle is judged to be on a start condition so that the shift lever 61 is not required to be locked.

As described above, according to the embodiment of the present invention, the following effects can be obtained.
(1) Even if the shift-lock occurs in the automated manual transmission 30 (S1) and the engine 10 has been stationary (S2), the shift stage of the automated manual transmission 30 is set to the first predetermined shift stage different from the shift stage required by the shift lever 61 in response to the driver's intention (S5). Accordingly, the "gap" can be generated for engaging the gear sets of the automated manual transmission 30 with the synchromesh mechanism, thus the shift-lock can be avoided with a higher reliability. Further, the shift operation in the transmission 30 is performed for corresponding the shift stage of the transmission 30 to the shift stage required by the shift lever 61. Therefore, according to the embodiment of the present invention, the shift-lock can be avoided and the vehicle can be parked under the gear-parking with a higher reliability even when the engine has been stationary.
(2) In addition, when the retry of the shift operation has not been completed ("NO" at step S6), the shift stage of the automated manual transmission 30 is set at the second predetermined shift stage different from the first predetermined shift stage and the shift stage required by the shift lever 61. Then, the shift operation of the transmission 30 is retried for corresponding the shift stage of the transmission 30 to the shift stage required by the shift lever 61 (step S7). Therefore, according to the embodiment of the present invention, the gear shift-lock can be avoided with a higher reliability and the vehicle can be parked under the gear-parking even when the engine 10 has been stationary.
(3) Even if the shift lever 61 has been positioned at the "N" position ("YES" at step S12) and the engine 10 has been stationary ("YES" at step S13), the shift lever 61 is locked. Further, if the ignition switch is "OFF" ("NO" at step S11), the shift lever 61 is locked as well. That is, while the engine 10 has been stationary, the ECU 50 prohibits the operation of the shift lever 61. Thus, the shift-lock is not caused. Therefore, even if the engine 10 has been stationary, it is possible to avoid the shift-lock of the gear. On the other hand, if the engine 10 is turning at the predetermined turning speed, the lock of the shift lever 61 is not performed. If the shift lever 61 has been still locked when the engine 10 is turning, the shift lever 61 is released from the locked condition (S15). Thus, it is possible to let the driver, who needs the gear-parking, start the engine 10. Therefore, it is possible to avoid the shift-lock in advance when the engine 10 is started, thus the gear-parking of the vehicle can be prevented from an ineffective condition. In addition, for the driver who does not need to restart the engine 10, since it is not possible to use the gear-parking, other parking methods (for example, a sprag) can be employed.

The embodiment of the present invention can be modified in following ways.

When the gear parking has been employed and an ignition key has been inserted into a key cylinder, the automated manual transmission system can be structured for a speaker (i.e. an alerting means) 17 to output a beep sound for a predetermined time. Structuring in this way, it is possible to alert the driver that the gear-parking condition has been surely performed. Further, when the engine 10 is started again, that is to say, when the ignition key is inserted into the key cylinder, the driver can be alerted that the vehicle has been under the gear-parking condition.

## Claims

1. An automated manual transmission system for a vehicle, comprising:
an automatic clutch assembly (20) for automatically performing a clutch engaging operation by means of a first actuator (23);
an automated manual transmission (30) for connection to an engine (10) via the automatic clutch assembly (20), having a second actuator (41, 42, 43) for shifting a sleeve (44, 45, 46) disposed between plural gear sets (G1 and G4) in an axial direction based on an operation of a shift lever (61), and for automatically shifting a shift stage in response to the axial movement of the sleeve; and
a control means (50) for controlling the automatic clutch assembly (20) and the automated manual transmission (30) by driving the first actuator (23) and the second actuator (41, 42, 43);
**characterized in that** the automated manual transmission system further includes a restricting means (64a, 64b, 64c, 65, 66, 66a) for restricting the operation of the shift lever (61), and the control means (50) restricts the operation of the shift lever (61) by use of the restricting means (64a, 64b, 64c, 65, 66, 66a) when the engine (10) has been stationary.

2. An automated manual transmission system according to claim 1, wherein
the control means (50) restricts the operation of the shift lever (61) by use of the restricting means (64a,64b,64c,65,66,66a) on the condition that the shift lever (61) has been positioned at a neutral position based upon the operation of the shift lever (61) and the engine (10) has been stationary.

## Patentansprüche

1. Automatisiertes Schaltgetriebesystem für ein Fahrzeug, mit:
einer automatischen Kupplungsanordnung (20) zum automatischen Durchführen eines Einkupplungsvorgangs mittels eines ersten Aktuators (23);
einem automatisierten Schaltgetriebe (30) zur Verbindung mit einer Brennkraftmaschine (10) über die automatische Kupplungsanordnung (20), mit einem zweiten Aktuator (41, 42, 43) zum Verschieben einer Muffe (44, 45, 46), die zwischen mehreren Zahnradsätzen (G1 und G4) angeordnet ist, in einer axialen Richtung basierend auf einer Betätigung eines Schalthebels (61) und zum automatischen Schalten einer Schaltstufe in Erwiderung auf die axiale Bewegung der Muffe; und
einem Steuerungsmittel (50) zum Steuern der automatischen Kupplungsanordnung (20) und des automatisierten Schaltgetriebes (30) durch Antreiben des ersten Aktuators (23) und des zweiten Aktuators (41, 42, 43);
**dadurch gekennzeichnet, dass** das automatisierte Schaltgetriebesystem ferner ein begrenzendes Mittel (64a, 64b, 64c, 65, 66, 66a) zum Begrenzen der Betätigung des Schalthebels (61) aufweist, und das Steuerungsmittel (50) die Betätigung des Schalthebels (61) unter Verwendung des begrenzenden Mittels (64a, 64b, 64c, 65, 66, 66a) begrenzt, wenn die Brennkraftmaschine (10) stillgestanden hat.

2. Automatisiertes Schaltgetriebesystem nach Anspruch 1, bei dem
das Steuerungsmittel (50) die Betätigung des Schalthebels (61) unter Verwendung des begrenzenden Mittels (64a, 64b, 64c, 65, 66, 66a) unter der Bedingung begrenzt, dass der Schalthebel (61) basierend auf der Betätigung des Schalthebels (61) in einer neutralen Position positioniert worden ist und die Brennkraftmaschine (10) stillgestanden hat.

## Revendications

1. Système de transmission manuelle automatisée pour un véhicule, comprenant :
un ensemble d'embrayage automatique (20) pour réaliser automatiquement une opération d'embrayage au moyen d'un premier actionneur (23) ;
une transmission manuelle automatisée (30) pour connexion à un moteur (10) via l'ensemble d'embrayage automatique (20), comportant un second actionneur (41, 42, 43) pour déplacer un manchon (44, 45, 46) disposé entre plusieurs trains d'engrenages (G1 et G4) dans une direction axiale en fonction de l'actionnement d'un levier de vitesse (61), et pour passer automatiquement une vitesse en réponse au déplacement axial du manchon ; et
des moyens de commande (50) pour commander l'ensemble d'embrayage automatique (20) et la transmission manuelle automatisée (30) en entraînant le premier actionneur (23) et le second actionneur (41, 42, 43) ;
**caractérisé en ce que** le système de transmission manuelle automatisée inclut en outre des moyens de retenue (64a, 64b, 64c, 65, 66, 66a) pour empêcher l'actionnement du levier de vitesse (61), et les moyens de commande (50) empêchent l'actionnement du levier de vitesse (61) en utilisant les moyens de retenue (64a, 64b, 64c, 65, 66, 66a) quand le moteur (10) a été arrêté.

2. Système de transmission manuelle automatisée selon la revendication 1, dans lequel
les moyens de commande (50) empêchent l'actionnement du levier de vitesse (61) en utilisant les moyens de retenue (64a, 64b, 64c, 65, 66, 66a) quand le levier de vitesse (61) a été positionné dans une position neutre en fonction de l'actionnement du levier de vitesse (61) et de ce que le moteur (10) a été arrêté.
